# EUROPÄISCHE PATENTSCHRIFT

(11) **EP 1 034 688 B1**
(45) Veröffentlichungstag und Bekanntmachung des Hinweises auf die Patenterteilung: **25.05.2005**
(21) Anmeldenummer: 98963365.6
(22) Anmeldetag: 17.11.1998
(51) Int. Cl.: H04Q 11/04, H04L 12/64

(54) **VERFAHREN ZUR REDUKTION VON ALS NUTZDATEN INNERHALB VON DATENPAKETEN ZU ÜBERTRAGENDEN KOMMUNIKATIONSDATEN**
METHOD FOR THE REDUCTION OF COMMUNICATIONS DATA WHICH IS TO BE TRANSMITTED AS USEFUL DATA WITHIN DATA PACKETS
PROCEDE DE REDUCTION DE DONNEES DE COMMUNICATION A TRANSMETTRE SOUS FORME DE DONNEES UTILES DANS DES PAQUETS DE DONNEES

(30) Priorität: 25.11.1997 DE 19752198
(43) Veröffentlichungstag der Anmeldung: 13.09.2000
(73) Patentinhaber: SIEMENS AKTIENGESELLSCHAFT, 80333 München (DE)
(72) Erfinder: HÜNLICH, Klaus, D-85467 Neuching (DE); FRAAS, Wolfgang, D-82515 Wolfratshausen (DE)
(86) Internationale Anmeldenummer: PCT/DE1998/003394
(87) Internationale Veröffentlichungsnummer: WO 1999/027751

(56) Entgegenhaltungen:
- US-A- 5 600 316
- HIROSHI NAKADA ET AL: "VARIABLE RATE SPEECH CODING FOR ASYNCHRONOUS TRANSFER MODE" IEEE TRANSACTIONS ON COMMUNICATIONS, Bd. 38, Nr. 3, 1. März 1990, Seiten 277-284, XP000113734
- OHM J R: "ADVANCED PACKET-VIDEO CODING BASED ON LAYERED VQ AND SBC TECHNIQUES" IEEE TRANSACTIONS ON CIRCUITS AND SYSTEMS FOR VIDEO TECHNOLOGY, Bd. 3, Nr. 3, 1. Juni 1993, Seiten 208-221, XP000385794

## Beschreibung

Die vorliegende Erfindung betrifft ein Verfahren zur Reduktion von als Nutzdaten innerhalb von Datenpaketen zu übertragenden Kommunikationsdaten unter Erhaltung ihres Informationsgehalts.

Es ist bekannt, Daten vor oder während einer Übertragung in Kommunikationsnetzen durch Kompression zu reduzieren und am Übertragungsziel durch Dekomprimieren wieder in den Ursprungszustand oder einen dazu gleichwertigen Zustand zurückzuführen. Dadurch soll üblicherweise die Belastung des Kommunikationsnetzes verringert bzw. bei vorgegebener Netzkapazität der Datendurchsatz erhöht werden.

Für Sprach- bzw. Videoübertragung werden üblicherweise sogenannte Prädiktionsverfahren zur Kompression eingesetzt, welche die statistische Ungleichverteilung von zu reduzierenden Sprach- bzw. Videodaten ausnutzen. Verfahren dieser Art sind beispielsweise in "Information und Codierung" von Richard W. Hamming, VCH Verlagsgesellschaft Weinheim, 1987, insbesondere auf den Seiten 81 bis 97 beschrieben. Eine Nutzinformation wird bei dieser Klasse von Verfahren geringfügig verfälscht, was aber aufgrund einer für Sprach- bzw. Videodaten charakteristisch hohen Redundanz bei solchen Daten im allgemeinen tolerierbar ist. Prädiktionsverfahren erlauben hohe Kompressionsraten und transformieren gleichmäßige, zu reduzierende Datenströme mit nur geringfügiger Verzögerung in ebenfalls gleichmäßige, komprimierte Datenströme. Gleichmäßige Datenströme im oben genannten Sinne sind Datenströme mit weitgehend konstanter Übertragungsrate. Die nur sehr geringe Verzögerung ist wesentlich für Telekommunikationsanwendungen.

Ein derartiges Verfahren zum Kodieren und Komprimieren von Sprachdaten mittels eines Prädiktionsverfahrens ist auch aus dem Aufsatz "Variable Rate Speech Encoding for Asychronous Transfer Mode" von Hiroshi Nakada und Ken-Ichi Sato in den IEEE Transactions on Communications, Bd. 38, Nr. 3, Seiten 277-284 vom 1. März 1990 bekannt.

Ein Verfahren zum Kodieren und Komprimieren von Videodaten mittels eines Prädiktionsverfahrens ist aus dem Aufsatz "Advanced Packet-Video coding Based on Layered VQ and SBC Techniques" von Jens-Rainer Ohm in den IEEE Transactions on Circuits and Systems for Video Technology, Bd. 3, Nr. 3, Seiten 208-221 vom 1. Juni 1993 bekannt.

Bei beiden Verfahren bedingt die Verwendung eines Prädiktionsverfahrens einen geringfügigen Verlust von Nutzinformation.

Wenn es sich bei den zu übertragenden Daten nicht um Sprachoder Videodaten handelt, kann ein Verlust von Nutzinformation in der Regel nicht toleriert werden. In diesen Fällen werden zur Kompression eindeutig umkehrbare Verfahren verwendet, die eine exakte Wiederherstellung der ursprünglichen Daten bei der Dekompression erlauben.

Ein einfaches derartiges Verfahren ist zum Beispiel aus der Druckschrift US 5600316 bekannt. Bei diesem Verfahren werden sich wiederholende Bitmuster in einem Datenstrom detektiert. Die wiederholenden Bitmuster werden daraufhin aus dem Datenstrom entfernt und durch eine das jeweilige Bitmuster sowie den Wiederholungsfaktor angebende Information ersetzt.

Häufig werden Verfahren verwendet, die die statistische Ungleichverteilung der konkret zu komprimierenden Daten analysieren und verwerten. Diese Verfahren arbeiten um so effizienter, je größer die zu komprimierenden Datensätze oder Datenblöcke sind. Um hohe Kompressionsraten zu erzielen, muß daher bei Vorliegen eines gleichmäßigen zu reduzierenden Datenstroms das Auffüllen ausreichend großer, jeweils als Ganzes zu komprimierender Datenblöcke durch den Datenstrom abgewartet werden. Dies führt zu einer insbesondere bei Quasi-Echtzeitanwendungen unerwünschten Verzögerung der Datenströme, die sich mindestens als störender Echoeffekt bemerkbar macht, aber auch das Zustandekommen von Verbindungen verhindern kann.

Wenn über dieselbe Übertragungsstrecke Daten unterschiedlicher Kategorie, wie z.B. Sprachdaten, Videodaten, Faxdaten und Dateidaten in Quasi-Echtzeit übertragbar sein sollen, müßten folglich gemäß dem Stand der Technik je nach Datenkategorie unterschiedliche Kompressionsverfahren verwendet werden. Für viele Anwendungen, beispielsweise bei gemeinsamer Nutzung einer Telekommunikationsleitung für Sprach- und Faxdaten, wobei letztere im Gegensatz zu ersteren nicht verfälscht werden dürfen, wäre dazu eine Umschaltung zwischen verschiedenen Kompressionsverfahren bzw. eine Abschaltung der Datenkompression notwendig. Hierzu wäre eine zuverlässige, schnelle Erkennung der Datenkategorie und damit aufwendige Erkennungsschaltungen erforderlich.

Aufgabe der vorliegenden Erfindung ist es, ein nicht so aufwendiges Verfahren zur Reduktion von als Nutzdaten innerhalb von Datenpaketen zu übertragenden Kommunikationsdaten unterschiedlicher Kategorie zu schaffen, das zu keinem Verlust von Nutzinformation führt und gleichzeitig die zu reduzierenden Datenströme kaum verzögert.

Gelöst wird diese Aufgabe erfindungsgemäß durch ein Verfahren mit den Merkmalen des Patentanspruchs 1 bzw. den Merkmalen des Patentanspruchs 4.

Vorteilhafte Ausführungsformen und Weiterbildungen der Erfindung sind in den abhängigen Ansprüchen angegeben.

Bei einer überwiegenden Übertragung von Sprachdaten ist die Anwendung eines Verfahrens nach Patentanspruch 1 vorteilhaft, während bei einer überwiegenden Übertragung von Videodaten die Anwendung eines Verfahrens nach Patentanspruch 4 von Vorteil ist. In beiden Fällen wird dadurch die Kompressionsrate optimiert.

Ein Merkmal der erfindungsgemäßen Verfahren ist die Verwendung eines Kompressionsverfahrens, das den Informationsgehalt von zu reduzierenden Kommunikationsdaten nicht verfälscht. Jedes der erfindungsgemäßen Verfahren kann damit ohne Informationsverlust gleichermaßen auf Sprachdaten, Videodaten, Faxdaten, Dateidaten etc. angewandt werden. Daten, die einer anderen Kategorie als Sprachdaten bzw. Videodaten angehören, werden durch ein erfindungsgemäßes Verfahren zwar im allgemeinen nicht wesentlich komprimiert, jedoch ist bei Kommunikationsdaten die mehrere, unterschiedlichen Datenkategorien angehörende Datenanteile aufweisen, keine aufwendige Unterscheidung bzw. Sonderbehandlung von Datenkategorien notwendig, da in keinem Fall ein Informationsverlust auftritt. Falls zu komprimierende Kommunikationsdaten mit mehreren Datenanteilen überwiegend aus Sprachdaten bzw. aus Videodaten bestehen, werden die Kommunikationsdaten als Ganzes gleichwohl effizient komprimiert. Dies stellt insbesondere bei paketvermittelnden Kommunikationsnetzen, wie z.B. ATM-Netzen, mit ihrer oft großen Datenvielfalt oder z.B. bei einer Übertragung von Sprach- und Faxdaten über gemeinsame Telekommunikationskanäle einen wesentlichen Vorteil dar.

Die zu komprimierenden Kommunikationsdaten werden mittels einer Zuordnungsvorschrift in Kodezeichen umgesetzt (kodiert), die anhand von repräsentativen Sprach- bzw. Videodaten in einem vorhergehenden Schritt festgelegt wird. Als repräsentative Daten können beliebige Sprach- bzw. Videodaten verwendet werden; vorteilhaft wären aber Daten, die den zu erwartenden Übertragungsdaten möglichst ähnlich sind, z.B. bei Sprachdaten einer überwiegend übertragenen Sprache angehören.

Nach Bestimmung der Zuordnungsvorschrift benötigt die konkrete Kodierung von Kommunikationsdaten, die z.B. über Tabellenzugriffe realisiert werden kann, nur noch sehr wenig Zeit und ist damit insbesondere für Quasi-Echtzeitanwendungen geeignet. Die Eindeutigkeit der Zuordnung erlaubt es, die ursprünglichen Daten bei einer Dekompression aus den kodierten Daten wieder exakt zu rekonstruieren. Die Kodezeichen werden dazu wieder durch die zugeordneten Datenmuster ersetzt, d.h. dekodiert. Auch dies läßt sich zeitsparend über Tabellenzugriffe realisieren.

Die Zuordnungsvorschrift weist den in Kommunikationsdaten auftretenden Datenmustern jeweils Kodezeichen mit in der Regel um so kürzeren Binärdarstellungen zu, je häufiger das jeweilige Datenmuster in repräsentativen Sprach- bzw. Videodaten auftritt. Im Rahmen dieser Regel wird den Datenmustern jeweils das Kodezeichen mit der kürzesten Binärdarstellung, das zur eindeutigen Zuordnung noch verfügbar ist, zugewiesen. Beispielsweise können Datenmustern, die nach der Häufigkeit ihres Auftretens in repräsentativen Sprach- bzw. Videodaten sortiert sind, sukzessive Kodezeichen zugeordnet werden, indem jeweils dem am häufigsten auftretenden und noch keinem Kodezeichen zugeordneten Datenmuster dasjenige noch freie Kodezeichen zugeordnet wird, das die kürzeste oder eine der kürzesten Binärdarstellungen besitzt.

Indem sehr häufig auftretende Datenmuster bei der Kodierung durch sehr kurze - im günstigsten Fall aus nur einem Bit bestehende - Kodezeichen dargestellt werden, während längere Kodezeichen seltener auftreten, werden die repräsentativen Sprach- bzw. Videodaten durch die Kodierung insgesamt komprimiert. Da die meisten konkret zu übertragenden Sprach- bzw. Videodaten eine ähnliche Häufigkeitsverteilung ihrer Datenmuster aufweisen wie die vorab analysierten, repräsentativen Sprach- bzw. Videodaten, werden durch dieselbe Kodierung auch zu übertragende Sprach- bzw. Videodatenanteile eines Datenstroms komprimiert, ohne selbst analysiert werden zu müssen.

Nach einer vorteilhaften Weiterbildung der Erfindung kann die an einer ersten Stelle eines Kommunikationsnetzes benutzte Zuordnungsvorschrift an eine zweite Stelle eines Kommunikationsnetzes übermittelt werden. Das Vorliegen der gleichen Zuordnungsvorschrift in Kodier- bzw. Dekodiereinrichtungen beider Stellen gestattet es, kodierten Datenverkehr zwischen diesen Stellen aufzunehmen. Durch Übermitteln der Zuordnungsvorschrift wird die zweite Stelle außerdem in die Lage versetzt, durch Weiterübermitteln der Zuordnungsvorschrift an wiederum andere Stellen des Kommunikationsnetzes, auch mit diesen einen kodierten Datenverkehr aufzunehmen. Auf diese Weise können die zur Kompression bzw. Dekompression notwendigen Informationen allen für kodierten Datenverkehr vorgesehenen Stellen eines Kommunikationsnetzes direkt oder indirekt übermittelt werden, so daß es genügt, an nur einer Stelle des Kommunikationsnetzes eine Einrichtung zur Bereitstellung dieser Zuordnungsvorschrift vorzusehen. Die Übermittlung der Zuordnungsvorschrift kann automatisiert werden und beispielsweise jeweils beim Aufbau von Verbindungen mittels reservierter Datenpakete erfolgen.

Sofern an einer Stelle des Kommunikationsnetzes eine Möglichkeit besteht, die Zuordnungsvorschrift anhand einer statistischen Häufigkeitsverteilung von Datenmustern zu bestimmen, kann das Übermitteln einer Zuordnungsvorschrift an diese Stelle durch ein Übermitteln einer der Zuordnungsvorschrift einer ersten Stelle zugrunde liegenden Häufigkeitsverteilung und ein anschließendes Bestimmen der Zuordnungsvorschrift an dieser Stelle, ersetzt werden. Durch Weiterübermittlung dieser Häufigkeitsverteilung an wiederum andere Stellen des Kommunikationsnetzes und jeweils anschließender Bestimmung der Zuordnungsvorschrift an diesen Stellen kann wie oben beschrieben auch mit diesen Stellen kodierter Datenverkehr aufgenommen werden. Auch die Übermittlung der Häufigkeitsverteilung kann automatisiert werden und beispielsweise jeweils beim Aufbau von Verbindungen mittels reservierter Datenpakete erfolgen.

Auf diese Weise können auch Änderungen der Zuordnungsvorschrift oder der Häufigkeitsverteilung, z.B. bei einem Wechsel von Sprach- zu Videoübertragung o.ä., allen über kodierten Datenverkehr in Verbindung stehenden Stellen des Kommunikationsnetzes bei Bedarf übermittelt werden, um eine hohe Kompressionsrate beizubehalten.

Es ist auch möglich, die Zuordnungsvorschrift oder die Häufigkeitsverteilung während einer Übertragung von Kommunikationsdaten durch statistische Analyse dieser konkret zu übertragenden Kommunikationsdaten - gegebenenfalls mehrmals - zu aktualisieren und die Änderungen jeweils mit zu übertragen. Auf diese Weise kann, falls zu Beginn einer Übertragung von Kommunikationsdaten noch keine Häufigkeitsverteilung oder Zuordnungsvorschrift für eine effiziente Kodierung vorliegt, die Häufigkeitsverteilung bzw. Zuordnungsvorschrift anhand der anfänglich zu übertragenden Kommunikationsdaten erstellt oder verfeinert werden.

Eine vorteilhafte Ausführungsform der Erfindung sieht die Verwendung von Huffman-Kodierungsalgorithmen vor. Diese beinhalten ein eindeutiges Verfahren zur Bestimmung der Zuordnungsvorschrift aus den relativen Häufigkeiten von Datenmustern und einfache Algorithmen zur Umsetzung der Zuordnungsvorschrift, d.h. zur Bestimmung des einem Datenmuster zugeordneten Kodezeichens bzw. des einem Kodezeichen zugeordneten Datenmusters. Die Algorithmen zur Umsetzung der Zuordnungsvorschrift beruhen nicht ausschließlich auf Tabellenzugriffen. Sie zeichnen sich aber ebenfalls durch sehr kurze Umsetzungszeiten aus. Eine Beschreibung der Prinzipien der Algorithmen findet sich beispielsweise in "Information und Codierung" von Richard W. Hamming, VCH Verlagsgesellschaft Weinheim, 1987, insbesondere auf den Seiten 53 bis 79.

Gemäß einer Weiterbildung der Erfindung kann die Zuordnungsvorschrift modifiziert werden, um die Füllzeiten von Datenpaketen zu begrenzen. Dies kann beispielsweise bei der Übertragung von Sprachdaten notwendig werden, wenn in längeren Sprachpausen häufig dem Datenmuster des Nullsignals zugeordnete und aufgrund dessen Häufigkeit sehr kurze Kodezeichen aufeinanderfolgen. Dadurch werden die mit kodierten Daten zu füllenden Datenpakete nur langsam aufgefüllt und damit verzögert. Ein analoges Problem tritt bei der Übermittlung von Videodaten auf, wenn z.B. Bilder mit größeren einheitlichen Farbflächen übertragen werden.

Die Füllzeiten von Datenpaketen können begrenzt werden, indem die Länge der Binärdarstellung der verwendeten Kodezeichen nach unten beschränkt wird, d.h. nur Kodezeichen mit einer bestimmten Mindestlänge vergeben werden. Im einfachsten Fall kann es genügen, in der Zuordnungsvorschrift das dem häufigsten Datenmuster (z.B. des Nullsignals) zugeordnete Kodezeichen mit einem längeren Kodezeichen zu vertauschen.

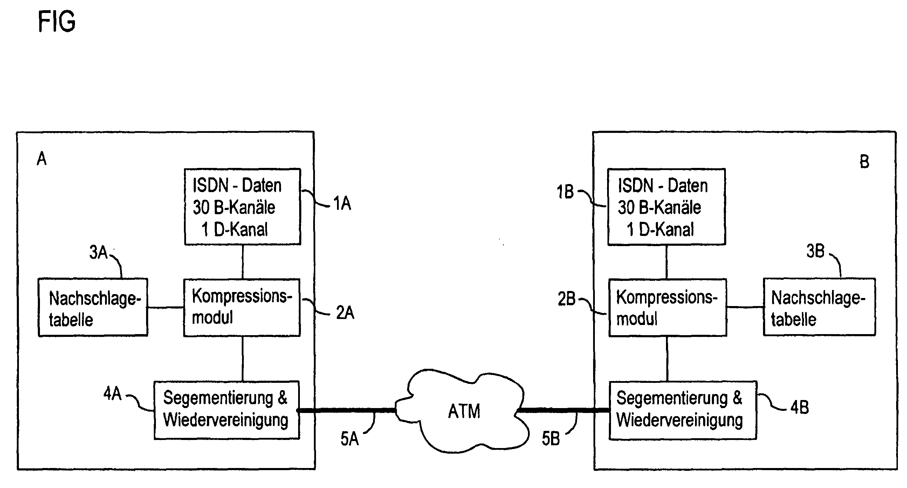

Die Erfindung wird nachfolgend anhand eines bevorzugten Ausführungsbeispiels unter Bezugnahme auf die Figur näher erläutert.

Die Figur zeigt in schematischer Darstellung zwei über ein ATM-Netz verbindbare Kommunikationsanlagen.

In der Figur sind zwei über ein ATM-Netz ATM verbindbare Kommunikationsanlagen A und B schematisch dargestellt, die als Funktionsblöcke jeweils ein ISDN-Datenmodul 1A, 1B, ein Kompressionsmodul 2A, 2B, eine Zuordnungstabelle 3A, 3B und ein ATM-Umsetzungsmodul 4A, 4B aufweisen. Die Kommunikationsanlagen A und B sind jeweils über eine Datenübertragungsstrecke 5A, 5B, die beispielsweise als Lichtwellenleiter ausgeführt sein kann, an das ATM-Netz ATM gekoppelt.

Das ISDN-Datenmodul 1A bzw. 1B, das gemäß einer Ausführungsform beispielsweise über 30 B-Kanäle und einen D-Kanal verfügen kann, sendet und/oder empfängt die über das ATM-Netz ATM zu übertragenden Kommunikationsdaten in Form von Zeitmultiplexrahmen an das bzw. vom Kompressionsmodul 2A bzw. 2B.

Das Kompressionsmodul 2A bzw. 2B kann sowohl zur Kompression der zu sendenden als auch zur Dekompression der empfangenen Kommunikationsdaten dienen. Es ist über das ATM-Umsetzungsmodul 4A bzw. 4B an das ATM-Netz ATM gekoppelt. Die Kompression wird durchgeführt, indem zu übertragende Datenmuster durch die ihnen jeweils in der Zuordnungstabelle 3A bzw. 3B eindeutig zugeordneten Kodezeichen ersetzt werden. Entsprechend werden bei der Dekompression die empfangenen Kodezeichen mittels der Zuordnungstabelle 3A bzw. 3B wieder durch die ihnen zugeordneten Datenmuster ersetzt. Die in der auch als Lookup-Table bezeichneten Zuordnungstabelle 3A bzw. 3B hinterlegte Zuordnungsvorschrift wird durch Anwendung eines Huffman-Kodierungsalgorithmus aus einer Häufigkeitsverteilung von Datenmustern in Kommunikationsdaten erstellt. Den Datenmustern werden dabei in der Regel Kodezeichen zugeordnet, deren Länge mit der Häufigkeit der Datenmuster abnimmt. Außerdem kann-das Kompressionsmodul 2A bzw. 2B noch einen Speicher zur kurzfristigen Zwischenspeicherung empfangener Daten enthalten, der dazu dient Schwankungen in der Übertragungsrate des Datenstroms auszugleichen. Ein solcher Speicher wird häufig als Jitterbuffer bezeichnet und ist in der Figur nicht dargestellt.

Die Aufgabe des auch als Segmentation & Reassembly Module bezeichneten ATM-Umsetzungsmoduls 4A bzw. 4B besteht im wesentlichen darin, zu sendende Kommunikationsdaten zu segmentieren und als Nutzinformation in ATM-Zellen einzufügen. Entsprechend wird in Empfangsrichtung die Nutzinformation wieder aus den ATM-Zellen extrahiert und in einen kontinuierlichen Datenstrom umgesetzt. Da bei der Datenkomprimierung Redundanz entfernt wird, hat der komprimierte Datenstrom in der Regel eine schwankende Zellrate. Aus diesem Grund ist es empfehlenswert als ATM Adaption Layer (AAL) entweder AAL 2 oder AAL 5 vorzusehen, weil deren Zellraten unterschiedlich groß sein können.

Bevor komprimierter Datenverkehr zwischen den Kommunikationsanlagen A und B aufgenommen werden kann, muß in A und B jeweils die gleiche, an die Kategorie der zu übertragenden Kommunikationsdaten angepaßte Zuordnungsvorschrift in den Zuordnungstabellen 3A und 3B vorliegen. Falls noch überhaupt keine, keine angepaßten oder unterschiedliche Zuordnungsvorschriften in 3A und 3B vorliegen, werden diese wie unten beschrieben, während der Übertragung der Kommunikationsdaten neu erstellt bzw. angeglichen. Für diesen als Initialisierung bezeichneten Schritt ist es vorteilhaft eine der Kommunikationsanlagen als den die Zuordnungsvorschrift bestimmenden Master und die andere als den die Zuordnungsvorschrift vom Master empfangenden Slave zu betreiben.

Bei der folgenden beispielhaften Beschreibung des Initialisierungsvorgangs wird die Kommunikationsanlage A als Master angesehen. Betrachtet sei eine Übertragung von Kommunikationsdaten von A nach B. Die zu Beginn der Datenübertragung vom ISDN-Datenmodul 1A an das Kompressionsmodul 2A gesendeten Kommunikationsdaten werden, da noch keine verwendbare Zuordnungsvorschrift in 3A vorliegt, zunächst ohne Kodierung an das ATM-Umsetzungsmodul 4A weitergegeben, das die unkomprimierten Daten über das ATM-Netz ATM nach B übermittelt. Außerdem werden diese Daten zur statistischen Auswertung in der Zuordnungstabelle 3A gesammelt, bis eine statistisch repräsentative Häufigkeitsverteilung der auftretenden Datenmuster vorliegt und daraus mittels eines Huffman-Kodierungsalgorithmus eine Zuordnung von Datenmustern zu Kodezeichen bestimmt werden kann. Die fertige Zuordnungsvorschrift wird anschließend sowohl in der Zuordnungstabelle 3A hinterlegt als auch über das ATM-Umsetzungsmodul 4A und das ATM-Netz ATM nach B übertragen. Dort werden die die Zuordnung beschreibenden Daten vom ATM-Umsetzungsmodul 4B an das Kompressionsmodul 2B übermittelt und von diesem in die Zuordnungstabelle 3B eingetragen, die somit die gleiche Zuordnungsvorschrift wie ihr Gegenstück in A beinhaltet. Damit ist die Initialisierung abgeschlossen und es kann komprimierter Datenverkehr zwischen A und B aufgenommen werden.

Bei komprimierter Datenübertragung von A nach B werden die zu übertragenden Kommunikationsdaten vom ISDN-Datenmodul 1A dem Kompressionsmodul 2A übergeben, das die zu übertragenden Datenmuster durch die ihnen in der initialisierten Zuordnungstabelle 3A jeweils zugeordneten Kodezeichen ersetzt. Der ausschließlich aus Kodezeichen bestehende Datenstrom wird vom ATM-Umsetzungsmodul 4A anschließend als Nutzinformation in einen Strom von ATM-Zellen eingefügt und über das ATM-Netz ATM an B übertragen. Dort wird vom ATM-Umsetzungsmodul 4B der kodierte Datenstrom wiederhergestellt und an das Kompressionsmodul 2B weitergegeben, wo die einzelnen Kodezeichen mittels der Zuordnungstabelle 3B wieder durch die ihnen zugeordneten Datenmuster ersetzt werden. Auf diese Weise werden die ursprünglichen Kommunikationsdaten wieder rekonstruiert und schließlich an das ISDN-Datenmodul 2B übergeben.

Eine komprimierte Datenübertragung von B nach A verläuft völlig analog zum oben beschriebenen Vorgang.

Da die Zuordnungsvorschrift in den Zuordnungstabellen 3A und 3B jeweils eindeutig und umkehrbar ist, tritt bei Kompression und Dekompression keinerlei Datenverlust auf. Dies gilt für Daten aller Kategorien.

## Patentansprüche

1. Verfahren zur Reduktion von als Nutzdaten innerhalb von Datenpaketen zu übertragenden, aus Sprachdaten und Nichtsprachdaten bestehenden Kommunikationsdaten durch Anwendung eines den Informationsgehalt der Kommunikationsdaten erhaltenden Datenkompressionsverfahrens, das die zu komprimierenden Kommunikationsdaten in Kodezeichen gemäß einer Zuordnungsvorschrift (3A, 3B) umsetzt, die durch vorherige Analyse ausschließlich von Sprachdaten bestimmt wird, und die in Kommunikationsdaten auftretenden Datenmustern jeweils Kodezeichen eindeutig zuordnet, deren Binärdarstellungen gemäß der vorgegebenen Regel der Zuordnungsvorschrift um so kürzer sind, je häufiger das jeweilige Datenmuster in den analysierten Sprachdaten auftritt.

2. Verfahren nach Anspruch 1,
**dadurch gekennzeichnet,**
**daß** für die vorherige Analyse eine repräsentative Auswahlmenge von Sprachdaten vorgesehen ist.

3. Verfahren nach Anspruch 1 oder 2,
**dadurch gekennzeichnet,**
**daß** wenigstens einem, in den analysierten Sprachdaten besonders häufig auftretenden Datenmuster ein Kodezeichen mit längerer Binärdarstellung als der Regel der Zuordnungsvorschrift entsprechend zugeordnet wird, falls die zum Füllen von Datenpaketen mit komprimierten Kommunikationsdaten benötigte Zeit ansonsten eine vorgebbare Grenze überschreiten würde.

4. Verfahren zur Reduktion von als Nutzdaten innerhalb von Datenpaketen zu übertragenden, aus Videodaten und Nichtvideodaten bestehenden Kommunikationsdaten durch Anwendung eines den Informationsgehalt der Kommunikationsdaten erhaltenden Datenkompressionsverfahrens, das die zu komprimierenden Kommunikationsdaten in Kodezeichen gemäß einer Zuordnungsvorschrift (3A, 3B) umsetzt, die durch vorherige Analyse ausschließlich von Videodaten bestimmt wird, und die in Kommunikationsdaten auftretenden Datenmustern jeweils Kodezeichen eindeutig zuordnet, deren Binärdarstellungen gemäß der vorgegebenen Regel der Zuordnungsvorschrift um so kürzer sind, je häufiger das jeweilige Datenmuster in den analysierten Videodaten auftritt.

5. Verfahren nach Anspruch 4,
**dadurch gekennzeichnet,**
**daß** für die vorherige Analyse eine repräsentative Auswahlmenge von Videodaten vorgesehen ist.

6. Verfahren nach Anspruch 4 oder 5,
**dadurch gekennzeichnet,**
**daß** wenigstens einem, in den analysierten Videodaten besonders häufig auftretenden Datenmuster ein Kodezeichen mit längerer Binärdarstellung als der Regel der Zuordnungsvorschrift entsprechend zugeordnet wird, falls die zum Füllen von Datenpaketen mit komprimierten Kommunikationsdaten benötigte Zeit ansonsten eine vorgebbare Grenze überschreiten würde.

7. Verfahren nach Anspruch 3 oder 6,
**dadurch gekennzeichnet,**
**daß** die Zuordnungsvorschrift für besonders häufig auftretende Datenmuster in Äbhängigkeit von der zu erwartenden Füllzeit eines nachfolgend zu übertragenden Datenpakets modifiziert wird.

8. Verfahren nach einem der vorhergehenden Ansprüche,
**dadurch gekennzeichnet,**
**daß** von einer ersten Stelle (A) eines Kommunikationsnetzes Informationen über die dort benutzte Zuordnungsvorschrift an eine zweite Stelle (B) des Kommunikationsnetzes übermittelt werden, um an der zweiten Stelle (B) für die Dekomprimierung von komprimierten Kommunikationsdaten verwendet zu werden.

9. Verfahren nach Anspruch 8,
**dadurch gekennzeichnet,**
**daß** bei einem Wechsel der Kategorie der zu übertragenden Kommunikationsdaten die Zuordnungsvorschrift an der ersten Stelle (A) des Kommunikationsnetzes aktualisiert wird und Informationen über die aktualisierte Zuordnungsvorschrift an die zweite Stelle (B) übermittelt werden.

10. Verfahren nach einem der vorhergehenden Ansprüche,
**dadurch gekennzeichnet,**
**daß** die Datenreduktion auf der Grundlage einer Huffman-Kodierung ausgeführt wird.

11. Verfahren nach einem der vorhergehenden Ansprüche,
**dadurch gekennzeichnet,**
**daß** Informationen über die statistische Ungleichverteilung von Datenmustern in Kommunikationsdaten von einer ersten Stelle (A) eines Kommunikationsnetzes an eine zweite Stelle (B) des Kommunikationsnetzes übermittelt werden, um an der zweiten Stelle (B) zu einer Bestimmung der Zuordnungsvorschrift verwendet zu werden.

12. Verfahren nach einem der vorhergehenden Ansprüche,
**dadurch gekennzeichnet,**
**daß** die komprimierten Kommunikationsdaten als Nutzdaten innerhalb von ATM-Zellen übertragen werden.

## Claims

1. Method for reduction of communications data which are to be transmitted as user data within data packets and comprise voice data and non-voice data, by using a data compression method which retains the information content of the communications data and converts the communications data to be compressed into code characters in accordance with an assignment rule (3A, 3B) which is determined by previous analysis of exclusively voice data, and the data patterns which occur in communications data are uniquely assigned to respective code characters whose binary representations are, according to the predetermined rule of the assignment rule, shorter the more frequently the respective data pattern occurs in the analysed voice data.

2. Method according to Claim 1,
**characterized**
**in that** a representative selection set of voice data is provided for the previous analysis.

3. Method according to Claim 1 or 2,
**characterized**
**in that** at least one data pattern which occurs particularly frequently in the analysed voice data is assigned a code character with a longer binary representation than would be the case in accordance with the rule of the assignment rule, if the time required to fill data packets with compressed communications data would otherwise exceed a limit which can be predetermined.

4. Method for reduction of communications data, which are to be transmitted as user data within data packets and comprise video data and non-video data, by using a data compression method which retains the information content of the communications data and converts the communications data to be compressed into code characters in accordance with an assignment rule (3A, 3B) which is determined by previous analysis of exclusively video data, and the data patterns which occur in communications data are uniquely assigned to respective code characters whose binary representations are, according to the predetermined rule of the assignment rule, shorter the more frequently the respective data pattern occurs in the analysed voice data.

5. Method according to Claim 4,
**characterized**
**in that** a representative selection set of video data is provided for the previous analysis.

6. Method according to Claim 4 or 5,
**characterized**
**in that** at least one data pattern which occurs particularly frequently in the analysed video data is assigned a code character with a longer binary representation than would be the case in accordance with the rule of the assignment rule, if the time required to fill data packets with compressed communications data would otherwise exceed a limit which can be predetermined.

7. Method according to Claim 3 or 6,
**characterized**
**in that** the assignment rule is modified for data patterns which occur particularly frequently, as a function of the expected filling time of a data packet which is to be transmitted subsequently.

8. Method according to one of the preceding claims,
**characterized**
**in that** information about the assignment rule used there is transmitted from a first point (A) in a communications network to a second point (B) in the communications network, in order to be used at the second point (B) for decompression of compressed communications data.

9. Method according to Claim 8,
**characterized**
**in that**, on changing the category of the communications data to be transmitted, the assignment rule at the first point (A) in the communications network is updated, and information about the updated assignment rule is transmitted to the second point (B).

10. Method according to one of the preceding claims,
**characterized**
**in that** the data reduction is carried out on the basis of Huffman coding.

11. Method according to one of the preceding claims,
**characterized**
**in that** information about the statistical unequal distribution of data patterns in communications data is transmitted from a first point (A) in a communications network to a second point (B) in the communications network, in order to be used at the second point (B) in order to determine the assignment rule.

12. Method according to one of the preceding claims,
**characterized**
**in that** the compressed communications data are transmitted as user data within ATM cells.

## Revendications

1. Procédé de réduction de données de communication à transmettre sous forme de données utiles dans des paquets de données et composées de données vocales et non vocales, par application d'un procédé de compression de données conservant le contenu d'information des données de communication et convertissant les données de communication à comprimer en caractères de code conformément à une instruction d'affectation (3A, 3B) qui est déterminée par une analyse préalable exclusivement de données vocales et qui affecte à des modèles de données apparaissant dans des données de communication, de manière univoque, respectivement des caractères de code dont les représentations binaires conformément à la règle prédéterminée de l'instruction d'affectation sont d'autant plus courtes que le modèle de données respectif dans les données vocales analysées est récurrent.

2. Procédé selon la revendication 1,
**caractérisé en ce que**
il est prévu pour l'analyse préalable une quantité de sélection représentative de données vocales.

3. Procédé selon la revendication 1 ou 2,
**caractérisé en ce que**
au moins un modèle de données particulièrement récurrent dans les données vocales analysées se voit affecter un caractère de code avec une représentation binaire plus longue que prévu par la règle de l'instruction d'affectation dans le cas où le temps nécessaire pour remplir les paquets de données de données de communication compressées dépasserait sans cela une limite prédéfinissable.

4. Procédé de réduction de données de communication à transmettre sous forme de données utiles dans des paquets de données et composées de données vidéo et non vidéo, par application d'un procédé de compression de données conservant le contenu d'information des données de communication et convertissant les données de communication à comprimer en caractères de code conformément à une instruction d'affectation (3A, 3B) qui est déterminée par une analyse préalable exclusivement de données vidéo et qui affecte à des modèles de données apparaissant dans des données de communication, de manière univoque, respectivement des caractères de code dont les représentations binaires conformément à la règle prédéterminée de l'instruction d'affectation sont d'autant plus courtes que le modèle de données respectif dans les données vidéo analysées est récurrent.

5. Procédé selon la revendication 4,
**caractérisé en ce que**
il est prévu pour l'analyse préalable une quantité de sélection représentative de données vidéo.

6. Procédé selon la revendication 4 ou 5
**caractérisé en ce que**
au moins un modèle de données particulièrement récurrent dans les données vidéo analysées se voit affecter un caractère de code avec une représentation binaire plus longue que prévu par la règle de l'instruction d'affectation dans le cas où le temps nécessaire pour remplir les paquets de données de données de communication compressées dépasserait sans cela une limite prédéfinissable.

7. Procédé selon la revendication 3 ou 6,
**caractérisé en ce que**
l'instruction d'affectation pour des modèles de données particulièrement récurrents est modifiée en fonction du temps escompté pour remplir un paquet de données à transmettre ultérieurement.

8. Procédé selon l'une des revendications précédentes,
**caractérisé en ce que**
depuis un premier endroit (A) d'un réseau de communication sont transmises des informations sur l'instruction d'affectation utilisée à cet endroit, vers un second endroit (B) du réseau de communication afin d'être utilisées audit second endroit (B) pour la décompression de données de communication compressées.

9. Procédé selon la revendication 8,
**caractérisé en ce que**
en cas de changement de la catégorie des données de communication à transmettre, l'instruction d'affectation est actualisée au premier endroit (A) du réseau de communication et des informations sur l'instruction d'affectation actualisée sont transmises au deuxième endroit (B).

10. Procédé selon l'une des revendications précédentes,
**caractérisé en ce que**
la réduction des données est effectuée sur la base d'un codage de Huffman.

11. Procédé selon l'une des revendications précédentes,
**caractérisé en ce que**
des informations sur l'inégale distribution statistique de modèles de données dans des données de communication sont transmises d'un premier endroit (A) d'un réseau de communication à un second endroit (B) du réseau de communication afin d'être utilisées audit second endroit (B) pour une détermination de l'instruction d'affectation.

12. Procédé selon l'une des revendications précédentes,
**caractérisé en ce que**
les données de communication compressées sont transmises sous forme de données utiles dans des cellules ATM.
